# EUROPÄISCHE PATENTSCHRIFT

(11) **EP 2 976 797 B1**
(45) Veröffentlichungstag und Bekanntmachung des Hinweises auf die Patenterteilung: **27.02.2019**
(21) Anmeldenummer: 14708571.6
(22) Anmeldetag: 10.03.2014
(51) Int. Cl.: H01M 2/10, B60K 1/04

(54) **SPEICHERZELLENBAUEINHEIT FÜR EIN KRAFTFAHRZEUG UND KRAFTFAHRZEUG MIT EINER SPEICHERZELLENBAUEINHEIT**
STORAGE CELL UNIT FOR A MOTOR VEHICLE AND MOTOR VEHICLE COMPRISING A STORAGE CELL UNIT
MODULE D'ÉLÉMENTS ACCUMULATEURS POUR VÉHICULE AUTOMOBILE ET VÉHICULE AUTOMOBILE ÉQUIPÉ D'UN MODULE D'ÉLÉMENTS ACCUMULATEURS

(30) Priorität: 19.03.2013 DE 102013204765
(43) Veröffentlichungstag der Anmeldung: 27.01.2016
(73) Patentinhaber: Bayerische Motoren Werke Aktiengesellschaft, 80809 München (DE)
(72) Erfinder: VOLZ, Karlheinz, 82266 Inning am Ammersee (DE)
(86) Internationale Anmeldenummer: PCT/EP2014/054544
(87) Internationale Veröffentlichungsnummer: WO 2014/146920

(56) Entgegenhaltungen:
- EP-A1- 2 371 599
- EP-A2- 2 072 308
- WO-A1-2015/049215
- DE-A1-102009 043 635
- DE-A1-102009 053 138

## Beschreibung

Die vorliegende Erfindung bezieht sich auf eine Speicherzellenbaueinheit für ein Kraftfahrzeug mit einem Elektroantrieb, die ein Gehäuse aufweist, in dem Speicherzellen angeordnet sind, und auf ein Kraftfahrzeug mit einer derartigen Speicherzellenbaueinheit.

Bekannte Elektrofahrzeuge weisen eine sogenannte Traktionsbatterie auf, die zur Speicherung von elektrischer Energie für einen Elektroantrieb bzw. Elektromotor des Kraftfahrzeugs dient. Derartige Traktionsbatterien sind aus Batteriezellen aufgebaut, die wiederum zu Batteriemodulen zusammengefasst sind. Die Batteriezellen bzw. Batteriemodule sind in einem Gehäuse untergebracht, das zum Schutz der Batteriezellen dient und Vorrichtungen enthält, die der Klimatisierung und Steuerung der Batteriezellen dienen. Beispielsweise ist eine derartige Batteriebaugruppe aus einem Gehäuse und Batteriezellen in einem Bodenbereich eines Kraftfahrzeugs zwischen Vorder- und Hinterachse des Kraftfahrzeugs angeordnet. Ein derartiger Energiespeicher für ein Kraftfahrzeug ist in der EP 2 244 318 A2 beschrieben.

Ferner ist es bekannt, wie in der DE 102010033806 A1 gezeigt ist, ein Batteriepack für Kraftfahrzeuge aus einer Vielzahl von Batterieelementen aufzubauen, wobei zwischen zumindest zwei benachbarten Batterieelementen Deformationselemente angeordnet sind, die im Falle eines Unfalles des Kraftfahrzeugs Energie durch Deformation absorbieren können.

In WO 2015/049215 A1 wird eine Speicherzellenbaueinheit beschrieben, die ein Gehäuse mit einem Energieabsorptionsbereich aufweist, der im Falle einer Kollision zur Energieabsorption verformbar ausgebildet ist, wobei der Energieabsorptionsbereich durch ein Wandelement des Gehäuses ausgebildet ist.

Es ist die Aufgabe der vorliegenden Erfindung, eine Speicherzellenbaueinheit sowie ein Kraftfahrzeug mit einer derartigen Speicherzellenbaueinheit zu schaffen, wobei im Falle einer Kollision durch die Speicherzellenbaueinheit Kollisionsenergie abbaubar ist.

Diese Aufgabe wird durch eine Speicherzellenbaueinheit für ein Kraftfahrzeug gelöst, die die Merkmale von Patentanspruch 1 aufweist. Ferner wird diese Aufgabe durch ein Kraftfahrzeug gelöst, das die Merkmale von Patentanspruch 6 aufweist.

Bevorzugte Weiterbildungen der Erfindung sind in den abhängigen Patentansprüchen aufgeführt.

Gemäß der vorliegenden Erfindung weist eine Speicherzellenbaueinheit für ein Kraftfahrzeug mit einem Elektroantrieb ein Gehäuse auf, in dem Speicherzellen angeordnet sind. Das Gehäuse weist ferner einen Energieabsorptionsbereich auf, der im Falle einer Kollision zur Energieabsorption verformbar ausgebildet ist.

Eine Speicherzellenbaueinheit ist eine Baueinheit zum Speichern von elektrischer Energie zum Antrieb eines Elektromotors des Kraftfahrzeugs. Die Speicherzellenbaueinheit kann eine Batterie als auch einen Kondensator zum Speichern von elektrischer Energie aufweisen. Der Energieabsorptionsbereich kann dabei sowohl zur Energieabsorption im Falle einer Kollision der Speicherzellenbaueinheit bei einem Transport als auch bei einer Kollision des Kraftfahrzeugs im eingebauten Zustand der Speicherzellenbaueinheit ausgeführt sein. Der Energieabsorptionsbereich des Gehäuses bildet insbesondere eine sogenannte Knautschzone oder Deformationszone des Gehäuses. Der Energieabsorptionsbereich ist dabei ein Wandelement, beispielsweise ein Außenwandelement, des Gehäuses, das entsprechend verformbar ausgebildet ist.

Bei der Speicherzellenbaueinheit gemäß der vorliegenden Erfindung kann der Energieabsorptionsbereich bevorzugt in einem Bereich des Gehäuses ausgebildet sein, in dem keine Speicherzellen angeordnet sind.

Damit beeinträchtigt eine Verformung des Energieabsorptionsbereichs des Gehäuses nicht den Bereich, in dem die Speicherzellen angeordnet sind und verhindert damit eine Beschädigung der Speicherzellen. Das Gehäuse kann damit eine Kollisionsenergie abbauen, ohne die Speicherzellen oder damit verbundene Einrichtungen zu beschädigen.

Bevorzugt ist der Energieabsorptionsbereich an äußeren Randbereichen des Gehäuses ausgebildet. Der Energieabsorptionsbereich kann beispielsweise an einem linken, seitlichen Rand oder/und einem rechten, seitlichen Rand oder/und einem vorderen Rand oder/und einem hinteren Rand des Gehäuses ausgebildet sein.

Vorteilhaft weist das Gehäuse einen Speicherzellenschutzbereich auf, in dem die Speicherzellen angeordnet sind und der im Falle der Kollision nicht verformbar ausgebildet ist. Mit anderen Worten hat die Speicherzellenbaueinheit einen Energieabsorptionsbereich, der verformbar ausgeführt ist, und einen Speicherzellenschutzbereich, der nicht verformbar ausgeführt ist. Mit verformbar und nicht verformbar ist damit insbesondere die Verformbarkeit oder Nichtverformbarkeit im Zusammenhang mit einer bestimmten Kollisionssituation gemeint. Derartige Kollisionssituationen können durch genormte Kollisionstests oder dergleichen vorgegeben sein.

Damit sind die Speicherzellen in dem Gehäuse hinreichend geschützt.

Gemäß einer weiteren bevorzugten Weiterbildung der Speicherzellenbaueinheit der vorliegenden Erfindung ist das Gehäuse gegenüber äußeren Umwelteinflüssen geschützt, insbesondere feststoffdicht und/oder flüssigkeitsdicht und/oder gasdicht, ausgeführt. Insbesondere sind hier Umwelteinflüsse gemeint, denen die Speicherzellenbaueinheit im Betrieb im Kraftfahrzeug ausgesetzt sind, so wie beispielsweise Staub, Schmutz, Wasser und dergleichen.

Die Speicherzellenbaueinheit gemäß der vorliegenden Erfindung kann ferner bevorzugt in dem Gehäuse eine elektrische Steuereinrichtung untergebracht haben, die insbesondere nicht in dem Energieabsorptionsbereich angeordnet ist. Die elektrische Steuereinrichtung kann eine Speicherzellensteuereinrichtung sein. Insbesondere ist die elektrische Steuereinrichtung in dem Speicherzellenschutzbereich angeordnet.

Damit ist sichergestellt, dass im Falle einer Kollision die elektrische Steuereinrichtung nicht beschädigt wird.

Bevorzugt kann das Gehäuse der Speicherzellenbaueinheit aus Stahl, Aluminium und/oder einem faserverstärkten Kunststoff bestehen.

Das Gehäuse der Speicherzellenbaueinheit gemäß der vorliegenden Erfindungen kann ferner Zwischenwände aufweisen, die die Speicherzellenbaueinheit versteifend ausgeführt sein können. Ferner können die Zwischenwände, sofern sie in dem Energieabsorptionsbereich angeordnet sind, zur Energieabsorption deformierbar ausgebildet sein, während sie, sofern sie in dem Speicherzellenschutzbereich angeordnet sind, nichtdeformierbar ausgebildet sein können.

Das Gehäuse kann insbesondere aus einer Bodenwand, d.h. einer unteren Wand, einer oberen Wand und Seitenwänden bestehen. Die bereits erwähnten Zwischenwände können sich dabei zwischen der Bodenwand und der oberen Wand erstrecken.

Ein Energieabsorptionsbereich ist dabei bevorzugt in der Bodenwand und/oder der oberen Wand nahe der Seitenwände des Gehäuses ausgebildet. Der vorstehend erwähnte Speicherzellenschutzbereich ist damit entfernt von den Seitenwänden in einem mittleren Bereich des Gehäuses zwischen der Bodenwand und der oberen Wand ausgebildet, während an den seitlichen Rändern des Gehäuses ein linker, rechter, vorder und/oder hinterer Energieabsorptionsbereich ausgebildet sein kann.

Die Zwischenwände können in dem Speicherzellenschutzbereich Speicherzellenmodule, die aus Speicherzellen aufgebaut sind, voneinander trennen.

Die Seitenwände können profiliert und/oder in Form eines Hohlträgers ausgebildet sein. Insbesondere können die Seitenwände doppelwandig ausgebildet sein. Die Seitenwände können ebenfalls Teil des Energieabsorptionsbereichs sein.

Die vorstehende Aufgabe wird ferner durch ein Kraftfahrzeug mit einer Speicherzellenbaueinheit, die vorstehend mit ihren Weiterbildungen beschrieben ist, gelöst, wobei das Gehäuse derart angepasst ist, dass es an einem linken äußeren Längsträger und einem rechten äußeren Längsträger fixiert bzw. angebunden ist. Ein äußerer Längsträger wird im Allgemeinen auch als Seitenschweller bezeichnet und ist der äußerste untere Längsträger einer Kraftfahrzeugkarosserie. Mit anderen Worten ist eine linke Seitenwand bzw. eine rechte Seitenwände des Gehäuses an den jeweiligen äußeren Längsträgern befestigt. Bevorzugt ist in dem Gehäuse ein linker Energieabsorptionsbereich ausgebildet, der benachbart zu dem linken äußeren Längsträger ausgebildet ist und sich insbesondere parallel zu dem linken äußeren Längsträger erstreckt. Gleichermaßen kann ein rechter Energieabsorptionsbereich in dem Gehäuse ausgebildet sein, der sich benachbart und insbesondere parallel zu dem rechten äußeren Längsträger erstreckt.

Gemäß einer bevorzugten Weiterbildung des Kraftfahrzeugs der vorliegenden Erfindung ist das Gehäuse direkt oder indirekt an einem vorderen Längsträgerpaar angebunden. Ein vorderer Längsträger eines Kraftfahrzeugs wird bei Kraftfahrzeugen, die einen Frontmotor aufweisen, auch Motorträger genannt. Mit anderen Worten ist das Gehäuse direkt oder indirekt mit einem hinteren Ende des vorderen Längsträgerpaars direkt oder indirekt verbunden. Insbesondere kann das Gehäuse einen vorderen Energieabsorptionsbereich aufweisen, der benachbart zu dem hinteren Ende des vorderen Längsträgerpaars ausgebildet ist. Insbesondere kann sich der vordere Energieabsorptionsbereich im Bereich einer vorderen Seitenwand des Gehäuses in einer Richtung quer zu dem vorderen Längsträgerpaar erstrecken.

Zusätzlich oder alternativ kann das Gehäuse direkt oder indirekt an einem hinteren Längsträgerpaar angebunden sein. Insbesondere kann es mit dem vorderen Ende des hinteren Längsträgerpaars direkt oder indirekt verbunden sein. Ein hinterer Energieabsorptionsbereich des Gehäuses kann dabei benachbart zu dem vorderen Ende des hinteren Längsträgerpaars ausgebildet sein. Insbesondere kann sich der hintere Energieabsorptionsbereich quer zu dem hinteren Längsträgerpaar erstrecken. Dabei kann der hintere Energieabsorptionsbereich im Bereich einer hinteren Seitenwand des Gehäuses ausgebildet sein.

Bevorzugt ist bei dem Kraftfahrzeug der vorliegenden Erfindung das Gehäuse derart ausgebildet, dass es eine Torsionssteifigkeit und/oder eine Biegesteifigkeit einer Kraftfahrzeugkarosserie des Kraftfahrzeugs erhöht.

Das Gehäuse kann insbesondere derart ausgebildet sein, dass es die Funktion eines strukturellen Karosseriequerträgers hat, der sich zwischen dem linken äußeren Längsträger und dem rechten äußeren Längsträger der Fahrzeugkarosserie erstreckt. Mit anderen Worten kann das Gehäuse selbst ein Querträger zwischen den äußeren Längsträgern sein.

Gemäß einer bevorzugten Weiterbildung des Kraftfahrzeugs der vorliegenden Erfindung ist ein Verbindungsbereich des Gehäuses mit dem linken äußeren Längsträger und dem rechten äußeren Längsträger derart ausgebildet, dass der Verbindungsbereich einen wirksamen Querschnitt des linken äußeren Längsträgers und des rechten äußeren Längsträgers erhöht. Mit anderen Worten trägt das Gehäuse zu einer Funktion des Längsträgers hinsichtlich einer Kollisionsfestigkeit bei. Dies ist insbesondere dann vorteilhaft, wenn die linke Seitenwand und die rechte Seitenwand des Gehäuses profiliert und/oder in Form eines Hohlträgers ausgebildet sind.

Bevorzugt ist bei dem Kraftfahrzeug der vorliegenden Erfindung das Gehäuse derart ausgebildet, dass bei einer Seitenkollision der Energieabsorptionsbereich zum Abbau einer Kollisionsenergie verformbar ist. Andererseits ist der Speicherzellenschutzbereich zum Schutz der Speicherzellen im Falle der Kollision nicht verformbar ausgebildet. Dies kann bei jeglicher Art von Kollision des Kraftfahrzeugs gelten, einer Seitenkollision, einer Frontalkollision oder einer Heckkollision, was eine Frontalkollision mit geringer Überlappung mit einschließt.

Die vorstehend beschriebenen Merkmale und Weiterbildungen der Erfindung können soweit möglich miteinander geeignet kombiniert werden.

Kurzbeschreibung der Figuren:
- Fig. 1: ist eine schematische Schnittansicht einer Speicherzellenbaueinheit gemäß einem Ausführungsbeispiel der Erfindung entlang einer Fahrzeugquer- und Hochachse.
- Fig. 2: ist eine schematische Draufsicht auf eine Speicherzellenbaueinheit gemäß dem Ausführungsbeispiel der vorliegenden Erfindung.

Nachstehend erfolgt eine Beschreibung eines Ausführungsbeispiels der vorliegenden Erfindung.

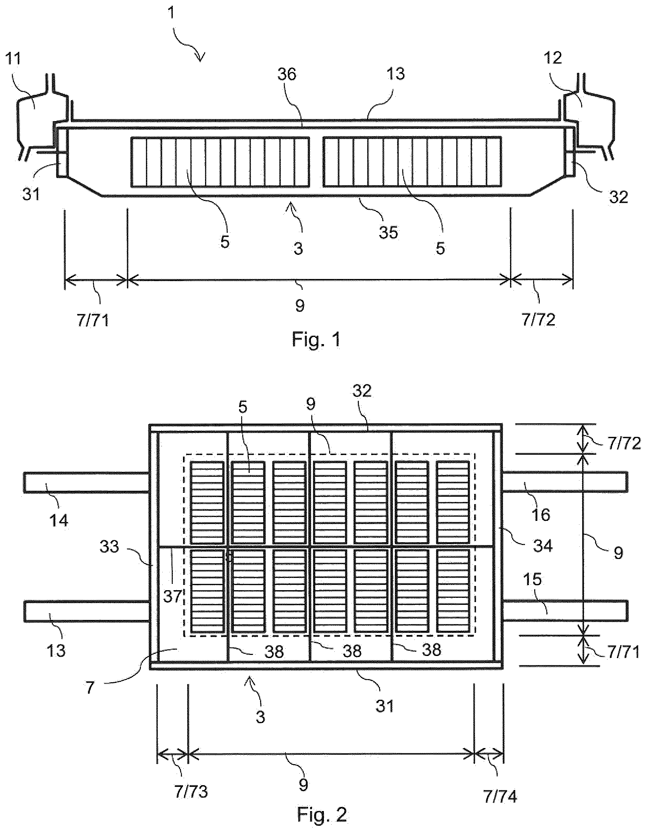

In Figur 1 ist eine Speicherzellenbaueinheit 1, die in einer Kraftfahrzeugkarosserie eines Kraftfahrzeugs eingebaut ist, gemäß dem Ausführungsbeispiel in einer Schnittansicht in Fahrzeugquerrichtung und -hochrichtung gezeigt. Die Speicherzellenbaueinheit 1 hat insbesondere ein gegenüber Umwelteinflüssen dichtes Gehäuse 3, das eine linke Seitenwand 31, eine rechte Seitenwand 32, eine vordere Seitenwand 33 (siehe Figur 2), eine hintere Seitenwand 34 (siehe Figur 2), eine Bodenwand 35 und eine obere Wand 36 aufweist. In dem Gehäuse 3 sind Speicherzellen 5 angeordnet. Insbesondere sind die Speicherzellen 5 in Speicherzellenbaugruppen bzw. Modulen angeordnet. Es sind mehrere Speicherzellenmodule in dem Gehäuse 3 untergebracht.

Wie in Figur 1 und in Figur 2 gezeigt ist, ist ein Energieabsorptionsbereich 7 nahe der Seitenwände 31, 32, 33, 34 ausgebildet. In einem mittleren oder zentralen Bereich (bezogen auf die Fahrzeuglängs- und querrichtung) des Gehäuses, wie insbesondere aus Figur 2 ersichtlich ist, ist ein Speicherzellenschutzbereich 9 (innerhalb der gestrichelten Linie in Figur 2) ausgebildet. Mit anderen Worten sind die Speicherzellen 9 beabstandet zu den Seitenwänden 31, 32, 33, 34 ausgebildet. Wie ferner in Figur 2 gezeigt ist, weist das Gehäuse 3 Zwischenwände 38 auf, die parallel zu der vorderen Seitenwand 33 bzw. der hinteren Seitenwand 34 verlaufen und die Bodenwand 35 und die obere Wand 36 miteinander verbinden. Ferner ist eine Längszwischenwand 37 gezeigt, die zwischen der vorderen Seitenwand 33 und der hinteren Seitenwand 34 bzw. der oberen Wand 36 und der Bodenwand 35 verläuft. Die Zwischenwände 37, 38 haben eine Funktion zum Versteifen des Gehäuses 3. Die Anzahl, Anordnung und Ausrichtung der Zwischenwände kann je nach Anforderung verändert werden.

Ferner ist/sind in dem Speicherzellenschutzbereich 9 eine oder mehrere Speicherzellensteuereinrichtungen untergebracht, die zur Steuerung der Speicherzellen 5 dienen.

Der Energieabsorptionsbereich 7 ist insbesondere in einen linken Energieabsorptionsbereich 71, einen rechten Energieabsorptionsbereich 72, einen vorderen Energieabsorptionsbereich 73 und einen hinteren Energieabsorptionsbereich 74 unterteilt, wobei die Energieabsorptionsbereiche jeweils zwischen der benachbarten äußeren Seitenwand und dem Speicherzellenschutzbereich 9 ausgebildet ist.

Wie in Figur 1 gezeigt ist, ist das Gehäuse 3 mit einem linken Seitenschweller 11 und einem rechten Seitenschweller 12 verbunden. Insbesondere steht die linke Seitenwand 31 mit dem Seitenschweller 11 in Verbindung und die rechte Seitenwand 32 mit dem Seitenschweller 12 in Verbindung. Die Seitenwände 31, 32, 33, 34 sind, wie schematisch angedeutet, bevorzugt doppelwandig ausgeführt. Die Seitenschweller 11 und 12 sind ferner durch ein Bodenblech 13 der Fahrzeugkarosserie miteinander verbunden.

Ferner ist die vordere Seitenwand 33 direkt oder indirekt mit einem vorderen Längsträgerpaar 13, 14 verbunden und ist die hintere Wand 34 mit einem hinteren Längsträgerpaar 15, 16 direkt oder indirekt verbunden.

Das Gehäuse 3 ist insgesamt derart ausgebildet, das es wie ein Querträger zwischen den Längsträgern 11 und 12 fungiert. Insbesondere hat es eine die Fahrzeugkarosserie insgesamt versteifende Wirkung. Es erhöht eine Torsionssteifigkeit sowie eine Biegesteifigkeit der Fahrzeugkarosserie. Ferner kann durch die Einbindung der Seitenwände 31 und 32 in die Längsträger 11 und 12 deren Querschnitt sogar geringer ausgeführt werden, da das Gehäuse 3 bzw. die Seitenwände als Ergänzung der seitlichen Längsträger 11, 12 dient.

Die Deformationsbereiche 71, 72, 73, 74 sind derart ausgebildet, dass sie im Fall einer Seitenkollision, einer Frontalkollision oder einer Heckkollision Kollisionsenergie durch Verformung abbauen können. Insbesondere sind die entsprechenden Seitenwände 31, 32, 33, 34 verformbar ausgebildet. Ferner sind die jeweiligen Abschnitte der Bodenwand 35 und der oberen Wand 36 des Gehäuses 3, die in dem Energieabsorptionsbereich 7 liegen, verformbar, beispielsweise faltbar, ausgebildet. Dahingegen sind die Bodenwand 35 sowie die obere Wand 36 im Bereich des Speicherzellenschutzbereiches 9 nicht verformbar ausgebildet. D.h. im Falle der beschriebenen Kollisionen ist die Bodenwand 35 sowie die obere Wand 36 im Bereich der Speicherzellenschutzbereiches 9 hinreichend steif ausgebildet, so dass es sich bei den entsprechenden Kollisionen nicht verformt und die Speicherzellen 5 geschützt bleiben. Unterstützend können hier die Zwischenwände 38 und 37 wirken.

## Patentansprüche

1. Speicherzellenbaueinheit (1) für ein Kraftfahrzeug mit einem Elektroantrieb, die ein Gehäuse (3) aufweist, in dem Speicherzellen (5) angeordnet sind, **dadurch gekennzeichnet, dass**
das Gehäuse (3) einen Energieabsorptionsbereich (7, 71, 72, 73, 74) aufweist, der im Falle einer Kollision zur Energieabsorption verformbar ausgebildet ist wobei der Energieabsorptionsbereich (7, 71, 72, 73, 74) durch ein Wandelement des Gehäuses (3) ausgebildet ist, wobei das Gehäuse ferner einen Speicherzellenschutzbereich (9) aufweist, in dem die Speicherzellen (5) angeordnet sind und der im Falle der Kollision nicht verformbar ausgebildet ist.

2. Speicherzellenbaueinheit nach Patentanspruch 1, wobei der Energieabsorptionsbereich (7, 71, 72, 73, 74) in einem Bereich des Gehäuses (3) ausgebildet ist, in dem keine Speicherzellen (5) angeordnet sind, und wobei der Energieabsorptionsbereich (7, 71, 72, 73, 74) insbesondere an äußeren Randbereichen des Gehäuses (3) ausgebildet ist.

3. Speicherzellenbaueinheit nach Patentanspruch 1 oder 2, wobei das Gehäuse (3) gegenüber äußeren Umwelteinflüssen geschützt, insbesondere feststoffdicht und/oder flüssigkeitsdicht und/oder gasdicht, ausgeführt ist.

4. Speicherzellenbaueinheit nach einem der Patentansprüche 1 bis 3, wobei in dem Gehäuse (3) zusätzlich eine elektrische Steuereinrichtung, insbesondere eine Speicherzellensteuereinrichtung, untergebracht ist, die insbesondere nicht in dem Energieabsorptionsbereich (7, 71, 72, 73, 74) angeordnet ist.

5. Speicherzellenbaueinheit nach einem der Patentansprüche 1 bis 4, wobei das Gehäuse (3) aus Stahl, Aluminium und/oder einem faserverstärktem Kunststoff besteht.

6. Kraftfahrzeug mit einer Speicherzellenbaueinheit nach einem der Patentansprüche 1 bis 5, wobei das Gehäuse (3) an einem linken, äußeren Längsträger (11) und an einem rechten, äußeren Längsträger (12) angebunden ist, und wobei insbesondere ein linker Energieabsorptionsbereich (71) benachbart zu dem linken, äußeren Längsträger (11) und ein rechter Energieabsorptionsbereich (72) benachbart zu dem rechten, äußeren Längsträger (12) ausgebildet ist.

7. Kraftfahrzeug nach Patentanspruch 6, wobei das Gehäuse (3) direkt oder indirekt an einem vordere Längsträgerpaar (13, 14) angebunden ist und/oder das Gehäuse (3) direkt oder indirekt an einem hinteren Längsträgerpaar (15, 16) angebunden ist, wobei insbesondere ein vorderer Energieabsorptionsbereich (73) benachbart zu dem vorderen Längsträgerpaar (13, 14) und/oder ein hinterer Energieabsorptionsbereich (74) benachbart zu dem hinteren Längsträgerpaar (15, 16) ausgebildet ist.

8. Kraftfahrzeug nach Patentanspruch 6 oder 7, wobei das Gehäuse (3) derart ausgebildet ist, dass es eine Torsionssteifigkeit und/oder eine Biegesteifigkeit einer Kraftfahrzeugkarosserie des Kraftfahrzeugs erhöht.

9. Kraftfahrzeug nach einem der Patentansprüche 6 bis 8, wobei das Gehäuse (3) derart ausgebildet ist, dass es die Funktion eines strukturellen Karosseriequerträgers hat, der sich zwischen dem linken, äußeren Längsträger (11) und dem rechten, äußeren Längsträger (12) der Fahrzeugkarosserie erstreckt.

10. Kraftfahrzeug nach einem der Patentansprüche 6 bis 9, wobei ein Verbindungsbereich des Gehäuses (3) mit dem linken, äußeren Längsträger (11) und dem rechten, äußeren Längsträger (12) derart ausgebildet ist, dass der Verbindungsbereich einen wirksamen Querschnitt des linken, äußeren Längsträgers (11) und des rechten, äußeren Längsträgers (12) erhöht.

11. Kraftfahrzeug nach einem der Patentansprüche 6 bis 10, wobei das Gehäuse (3) derart ausgebildet ist, dass bei einer Seitenkollision und/oder einer Frontalkollision und/oder einer Heckkollision der Energieabsorptionsbereich (7, 71, 72, 73, 74) des Gehäuses verformbar ist und insbesondere der Speicherzellenschutzbereich (9) zum Schutz der Speicherzellen (5) nicht verformbar ist.

## Claims

1. A storage cell unit (1) for a motor vehicle with an electric drive, having a housing (3) in which storage cells (5) are arranged,
**characterized in that**
the housing (3) has an energy absorption region (7, 71, 72, 73, 74) which is formed such that it is deformable for the purpose of absorbing energy in the event of a collision, wherein the energy absorption region (7, 71, 72, 73, 74) is formed by a wall element of the housing (3), wherein the housing further has a storage cell protection region (9) in which the storage cells (5) are arranged and which is formed such that it is not deformable in the event of the collision.

2. A storage cell unit according to claim 1, wherein the energy absorption region (7, 71, 72, 73, 74) is formed in a region of the housing (3) in which no storage cells (5) are arranged, and wherein the energy absorption region (7, 71, 72, 73, 74) is formed in particular at outer edge regions of the housing (3).

3. A storage cell unit according to claim 1 or 2, wherein the housing (3) is formed such that it is protected against external environmental influences, in particular such that it is impervious to solids and/or liquids and/or gases.

4. A storage cell unit according to one of claims 1 to 3, wherein an electrical controller, in particular a storage cell controller, is arranged in the housing (3) in addition, which controller is in particular not arranged in the energy absorption region (7, 71, 72, 73, 74).

5. A storage cell unit according to one of claims 1 to 4, wherein the housing (3) is made of steel, aluminium and/or a fibre-reinforced plastic.

6. A motor vehicle having a storage cell unit according to one of claims 1 to 5, wherein the housing (3) is connected to a left, outer longitudinal beam (11) and a right, outer longitudinal beam (12), and wherein in particular a left energy absorption region (71) is formed adjacent to the left, outer longitudinal beam (11) and a right energy absorption region (72) is formed adjacent to the right, outer longitudinal beam (12).

7. A motor vehicle according to claim 6, wherein the housing (3) is directly or indirectly connected to a front longitudinal beam pair (13, 14) and/or the housing (3) is directly or indirectly connected to a rear longitudinal beam pair (15, 16), wherein in particular a front energy absorption region (73) is formed adjacent to the front longitudinal beam pair (13, 14) and/or a rear energy absorption region (74) is formed adjacent to the rear longitudinal beam pair (15, 16).

8. A motor vehicle according to claim 6 or 7, wherein the housing (3) is formed such that it increases a torsional rigidity and/or a flexural rigidity of a motor vehicle body of the motor vehicle.

9. A motor vehicle according to one of claims 6 to 8, wherein the housing (3) is formed such that it has the function of a structural body transverse beam which extends between the left, outer longitudinal beam (11) and the right, outer longitudinal beam (12) of the vehicle body.

10. A motor vehicle according to one of claims 6 to 9, wherein a connecting region of the housing (3) with the left, outer longitudinal beam (11) and the right, outer longitudinal beam (12) is formed such that the connecting region increases an effective cross-section of the left, outer longitudinal beam (11) and the right, outer longitudinal beam (12).

11. A motor vehicle according to one of claims 6 to 10, wherein the housing (3) is formed such that, in the event of a lateral collision and/or a head-on collision and/or a rear-end collision, the energy absorption region (7, 71, 72, 73, 74) of the housing is deformable and in particular the storage cell protection region (9) is not deformable in order to protect the storage cells (5).

## Revendications

1. Module de cellule d'accumulation (1) destiné à un véhicule à entraînement électrique qui comporte un boitier (3) dans lequel sont montées des cellules d'accumulation (5),
**caractérisé en ce que**
le boitier (3) comporte une zone d'absorption d'énergie (7, 71, 72, 73, 74) qui est réalisée de façon à être déformable en cas de collision pour permettre l'absorption d'énergie, la zone d'absorption d'énergie (7, 71, 72, 73, 74) étant formée par un élément de paroi du boitier (3), le boitier comportant en outre une zone de protection des cellules d'accumulation (9) dans laquelle sont montées les cellules d'accumulation (5) et qui n'est pas déformable en cas de collision.

2. Module de cellules d'accumulation conforme à la revendication 1,
dans lequel,
la zone d'absorption d'énergie (7, 71, 72, 73, 74) est formée dans une zone du boitier (3) dans laquelle il n'y a pas de cellule d'accumulation (5) et la zone d"absorption d'énergie (7, 71, 72, 73, 74) est en particulier formée sur des zones de bord externe du boitier (3).

3. Module de cellules d'accumulation conforme à la revendication 1 ou 2,
dans lequel,
le boitier (3) est protégé vis-à-vis des influences de l'environnement externe, et est en particulier étanche aux solides et/ou étanche aux liquides et/ou étanche aux gaz.

4. Module de cellule d'accumulation conforme à l'une des revendications 1 à 3,
dans lequel,
dans le boitier (3) est en outre logé un dispositif de commande électrique, en particulier un dispositif de commande des cellules d'accumulation qui n'est en particulier pas monté dans la zone d'absorption d'énergie (7, 71, 72, 73, 74).

5. Module de cellule d'accumulation conforme à l'une des revendications 1 à 4,
dans lequel,
le boitier (3) est réalisé en acier, en aluminium, et/ou en un matériau synthétique renforcé par des fibres.

6. Véhicule comportant un module de cellules d'accumulation conforme à l'une des revendications 1 à 5,
dans lequel,
le boitier (3) est attaché à un support longitudinal externe gauche (11) et à un support longitudinal externe droit (12), et, en particulier une zone d'absorption d'énergie gauche (71) est formée au voisinage du support longitudinal externe gauche (11) et une zone d'absorption d'énergie droite (72) est formée au voisinage du support longitudinal externe droit (12).

7. Véhicule conforme à la revendication 6,
dans lequel,
le boitier (3) est attaché directement ou indirectement à une paire de supports longitudinaux avant (13, 14) et/ou le boitier (3) est attaché directement ou indirectement à une paire de supports longitudinaux arrière (15, 16) et en particulier une zone d'absorption d'énergie avant (73) est formée au voisinage de la paire de supports longitudinaux avant (13, 14) et/ou une zone d'absorption d'énergie arrière (74) est formée au voisinage de la paire de supports longitudinaux arrière (15, 16).

8. Véhicule conforme à la revendication 6 ou 7,
dans lequel,
le boitier (3) est réalisé de sorte qu'il augmente la rigidité en torsion et/ou la rigidité en flexion de la carrosserie du véhicule.

9. Véhicule conforme à l'une des revendications 6 à 8,
dans lequel,
le boitier (3) est réalisé de sorte qu'il ait la fonction d'un support transversal de structure de carrosserie qui s'étend entre le support longitudinal externe gauche (11) et le support longitudinal externe droit (12) du véhicule.

10. Véhicule conforme à l'une des revendications 6 à 9,
dans lequel,
la zone de liaison du boitier (3) avec le support longitudinal externe gauche (11) et avec le support longitudinal externe droit (12) est formée de sorte qu'elle augmente la section active du support longitudinal externe gauche (11) et du support longitudinal externe droit (12).

11. Véhicule conforme à l'une des revendications 6 à 10,
dans lequel,
le boitier (3) est réalisé de sorte qu'en présence d'une collision latérale et/ou d'une collision frontale et/ou d'une collision par l'arrière, la zone d'absorption d'énergie (7, 71, 72, 73, 74) du boitier puisse être déformée, et en particulier que la zone de protection des cellules d'accumulation (9) ne puisse pas être déformée pour permettre la protection des cellules d'accumulation (5).
